# EUROPÄISCHE PATENTSCHRIFT

(11) **EP 0 324 937 B1**
(45) Veröffentlichungstag und Bekanntmachung des Hinweises auf die Patenterteilung: **25.08.1993**
(21) Anmeldenummer: 88120237.8
(22) Anmeldetag: 03.12.1988
(51) Int. Cl.: G05D 11/13, B24C 7/00

(54) **Vorrichtung zum Beladen eines Trägergasstroms mit einem fliessfähigen Stoff und Verfahren zum Betrieb der Vorrichtung**
Apparatus for introducing a fluid substance into a carrier gas, and method for operating the apparatus
Dispositif pour charger un gaz porteur avec une substance fluide et méthode pour l'exploitation du dispositif

(30) Priorität: 19.01.1988 CH 177/88
(43) Veröffentlichungstag der Anmeldung: 26.07.1989
(73) Patentinhaber: LONZA AG, CH-4002 Basel (CH)
(72) Erfinder: Furrer, Hansjörg, CH-4417 Ziefen (CH); Richle, Norbert, CH-5453 Remetschwil (CH); Heusser, Willi, CH-8127 Forch (CH)
(74) Vertreter: Keller, René, Dr.

(56) Entgegenhaltungen:
- EP-A- 0 243 269
- EP-A- 0 250 881
- CH-A- 0 453 121
- GB-A- 2 047 553
- ADVANCES IN INSTRUMENTATION, Band 35, Nr. 2, Seiten 319-326, Pittsburgh, US; R.L. HEIDER et al.: "The programmable controller as a process link to a distributed computer network"

## Beschreibung

Die Erfindung betrifft eine Vorrichtung zum Beladen eines Trägergasstroms mit einem fliessfähigen Stoff und ein Verfahren zum Betrieb der Vorrichtung.

Vorrichtung dieser Art werden zum Beispiel für das Entzundern der Innenfläche glühender Luppen bei der Herstellung nahtloser Rohre verwendet. Sie dienen dazu, einen Trägergasstrom mit pulverförmigem Entzunderungsmittel zu beladen, der dann durch die glühende Luppe geleitet wird. Die Vorrichtung kann aber auch für andere Andwendungen dienen und einen Trägergastrom mit anderen fliessfähige Stoffen, insbesondere anderen pulverförmigen oder körnigen bzw. partikelförmigen Stoffen beladen.

Aus der EP-0 243 269-A3 ist eine Vorrichtung gemäss Oberbegriff des Anspruchs 1 bekannt. Dabei wird aus einem unter Druck stehenden Vorratsbehälter ein pulverförmiger Stoff mittels eines Drehförderers und eines Ventils einem Trägergasstrom, der mittels eines Ventils gesteuert wird, zugeführt. Die Ventile werden von einem Computer durch Programme zeitgesteuert. Um die Konzentration des Materialflusses zu kontrollieren, werden die Drucke in den Vorratsbehältern und den Versorgungsleitungen entsprechend eingestellt. Das Nachfüllen der Vorratsbehälter aus einem Trichter geschieht aufgrund der Signale von Gewichtssensoren.

Die Steuerung der bekannten Anlage ist wie folgt:
Der Startbefehl wird über eine Schalttafel durch eine Bedienperson eingegeben. Daraufhin wird das Ventil, das den Trägergasstrom steuert, geöffnet, bis der Druck des Transportgases den gewünschten Wert annimmt. Sensorgesteuert wird daraufhin die Zerstäuberdüse in den zu behandelnden Behälter eingeschoben. In dieser Zeit wird nur Trägergas gefördert. Dann wird der Tank unter Druck gesetzt. Wenn der gewünschte Druck vorhanden ist, wird der Fördermotor in Betrieb gesetzt ohne dass aber das nachgeschaltete Ventil, welches die Zugabe des geförderten Materials in den Trägergasstrom kontrolliert, geöffnet worden ist. Schliesslich wird das pulverförmige Material dem Gasstrom zugeführt, in dem das dem Fördermotor nachgeschaltete Ventil geöffnet wird.

Aufgabe der Erfindung ist es, einen Trägergasstrom wahlweise mit verschiedenen, exakt bemessenen Stoffmengen und/oder Stoffkonzentrationen (Stoffmengen pro Trägergasvolumen) zu beladen und das Beladen mit unterschiedlichen Stoffmengen bzw. Stoffkonzentrationen in rascher Folge zu ermöglichen.

Die erfindungsgemässe Lösung dieser Aufgabe ist Gegenstand des Anspruchs 1.

Die zeitgesteuerten Schaltbefehle für das Oeffnen und Schliessen des Absperrorgans und die beiden unterschiedlichen Sollwerte für den ersten und zweiten Druckregler jedes Programms bestimmen sowohl die Stoffmenge als auch die Stoffkonzentration. Die Stoffkonzentration wird im wesentlichen durch die Differenz der beiden Sollwerte bestimmt. Die Stoffmenge wird unmittelbar durch die Differenz der Sollwerte und durch die Oeffnungszeit des Absperrorgans bestimmt, wobei sie nicht proportional zur Oeffnungszeit zunimmt und eine Aenderung der Stoffmenge sich genauer durch Aenderung der Sollwertdifferenz (und damit der Konzentration) als durch Aenderung der Oeffnungszeit erreichen lässt.

Die Vorteile der Erfindung sind beispielsweise bei der Verwendung der Vorrichtung für das Entzundern von Luppen darin zu sehen, dass das Entzunderungsmittel für jede Luppenabmessung in genau der erforderlichen Gesamtmenge und Konzentration, d.h. exakt in der pro Flächeneinheit erforderlichen Menge aufgebracht werden kann, so dass eine einwandfreie Entzunderung unter homogener Verteilung des Mittels über die Luppenfläche und kleinstmöglichem Verbrauch des Mittels erreicht wird. Und dass Luppen unterschiedlicher Abmessungen (Durchmesser und/oder Länge) rasch aufeinanderfolgend mit entsprechend geänderten Mengen und/oder Konzentrationen des Entzunderungsmittels entzundert werden können, indem für jede Luppengrösse ein entsprechendes Programm in Programmspeicher gespeichert und mittels des Wählers jeweils abgerufen werden kann.

Bevorzugte Ausführungsarten der Vorrichtung und das Verfahren zum Betrieb der Vorrichtung sind in den Ansprüchen 2 bis 8 umschrieben.

Im folgenden wird ein Ausführungsbeispiel der Erfindung anhand der Zeichnung näher beschrieben.

Es zeigen:

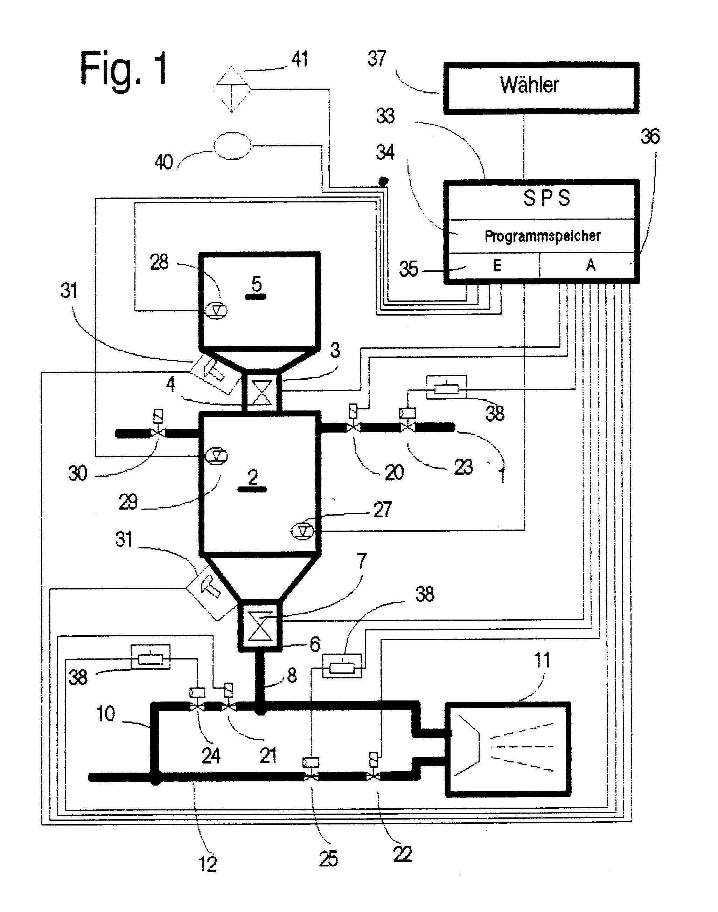

- Fig. 1: eine schematische Darstellung einer erfindungsgemässen Vorrichtung,
- Fig. 2: die Potentiometeransteuerung der Druckregler der Vorrichtung von Fig. 1, und
- Fig. 3: ein Flussdiagramm des mittels eines Wählers modifizierbaren Hauptprogramms und des Nachfüll-Unterprogramms der Steuereinrichtung der Vorrichtung von Fig. 1.

Die dargestellte Vorrichtung dient zum Beladen eines Trägergassstroms mit wählbaren Mengen und Konzentrationen eines pulverförmigen Entzunderungs- oder Beizmittels, besipielsweise eines Beizmittels der in der EP-A 169 413 beschriebenen Art, das mittels des Trägergasstroms auf die Innenfläche von Luppen aufgetragen wird.

Sie hat einen an Druckgasleitung 1 angeschlossenen Vorratsbehälter 2 für das Entzunderungsmittel, der so gross bemessen ist, dass er eine für das Entzundern einer Vielzahl, z. B. 20-30 Luppen ausreichende Menge des Mittels aufnehmen kann. Der oben am Behälter 2 angeordnete Stoffeinlass 3 steht über ein Absperrorgan 4 mit einem darüber angeordneten Nachfülltrichter 5 in Verbindung. Der unten am Behälter 2 angeordnete Stoffauslass 6 ist durch ein Absperrorgan 7 absperrbar und mit einem Stutzen 8 einer Trägergasleitung 10 verbunden. Die Druckgasleitung 1 und die Trägergasleitung 10 können mit Druckluft, z. B. aus einem Druckluftnetz oder einem Kompressor, oder mit Inertgas, z.B. Stickstoff gespeist sein.

Der in Strömungsrichtung hinter dem Stutzen 8 liegende Abschnitt der Trägergasleitung 10, durch den das mit dem Stoff beladene Trägergas strömt, ist an ein Durchlassorgan einer Austrageinrichtung 11 angeschlossen. Die (nicht näher dargestellte) Austrageinrichtung 11 ist beispielsweise entsprechend der in der europäischen Patentanmeldung 250 881 beschriebenen Einrichtung mit einem (nicht dargestellten) Drallgeber ausgeführt. Der Drallgeber ist an eine Zweigleitung 12 der Trägergasleitung angeschlossen, die in Strömungsrichtung vor dem Stutzen 8 von der Trägergasleitung 10 abgezweigt ist.

In der Druckgasleitung 1, im in Strömungsrichtung vor dem Stutzen 8 liegenden Zuleitungsabschnitt der Trägergasleitung 10 und in der Zweigleitung 12 sind je ein elektrisch steuerbares Absperrorgan 20, 21, 22 und ein Druckregler 23, 24, 25 mit steuerbarem Sollwert angeordnet. Als Druckregler 23, 24, 25 eignet sich z. B. das Druckregelventil XRE der Firma Hoerbiger, das den Druck in Abhängigkeit einer elektrischen Spannung oder eines Widerstands regelt.

In unteren Teil des Behälters 2 und des Nachfülltrichters 5 ist je ein Niveaufühler 27, 28 angeordnet, welcher das Erreichen oder Unterschreiten eines minimalen Füllstands detektiert. Für die Detektion eines Erreichens oder Ueberschreitens eines maximalen Füllstands ist im oberen Teil des Behälters 2 ein weiterer Niveaufühler 29 angeordnet. (Entsprechend kann im oberen Teil des Nachfülltrichters ein zusätzlicher Niveaufühler angeordnet sein). Das für das Nachfüllen erforderliche Entlüften des Behälters 2 erfolgt durch ein Entlüftungsventil 30. Am unteren Teil des Behälters 2 und des Nachfülltrichters 5 ist ferner je eine Rütteleinrichtung 31 angeordnet, die sicherstellt, dass der Stoff gleichmässig verteilt nachrutscht.

Die Absperrorgane 4, 7, 20-22, die Druckregler 23-25, das Entlüftungsventil 30 und die Rütteleinrichtungen 31 sind durch eine Programmsteuereinrichtung 33 mit einem Programmspeicher 34 und einer Uhr gesteuert, deren Eingänge und Ausgänge mit 35 und 26 bezeichnet sind. Es handelt sich um eine sog. speicherprogrammierbare Steuerung (SPS) vom Typ MELSEC F2-60 M mit 1000 Worte RAM/EPROM Speicher der Firma Mitsubishi Electric.

Im Programmspeicher 34 sind mehrere Programme für das Beladen des Trägergasstroms mit unterschiedlichen Stoffmengen und Stoffkonzentrationen gespeichert, die je einer bestimmten Luppengrösse zugeordnet sind. Die verschiedenen Programme können je als vollständige Programme im Programmspeicher 34 gespeichert sein oder es kann - wie weiter unten im einzelnen erläutert - ein gemeinsames Hauptprogramm mit mehreren verschiedenen Datensätzen gespeichert sein, wobei jeder der verschiedenen Datensätze eine Programmmodifikation des Hauptprogramms bildet. Die Programmwahl bzw. die Wahl der Programmmodifikation erfolgt mittels eines Wählers 37.

Jedes Programm bzw. jede Programmmodifikation hat, wie weiter unten näher beschrieben, zeitgesteuerte Schaltbefehle für das Oeffnen und Schliessen der Absperrorgane 4, 7, 20-23, 30 und je einen Sollwert pₓ₁, pₓ₂, pₓ₃ für die Druckregler 23-25. Massgebend für die Stoffmenge und die Stoffkonzentration ist die Differenz der Sollwerte pₓ₁, pₓ₂ für die Druckregler 23 und 24 sowie die durch die zeitgesteuerten Schaltbefehle bestimmte Oeffnungszeit tₓ₂ des Absperrorgans 7. Die Stoffkonzentration ist zudem noch abhängig vom Sollwert pₓ₃ des Druckreglers 25, der den Fluss des zusätzlich durch die Zweigleitung 12 in die Austrageinrichtung 11 strömenden Gases regelt. (Je grösser pₓ₃ ist, umso kleiner ist die Konzentration).

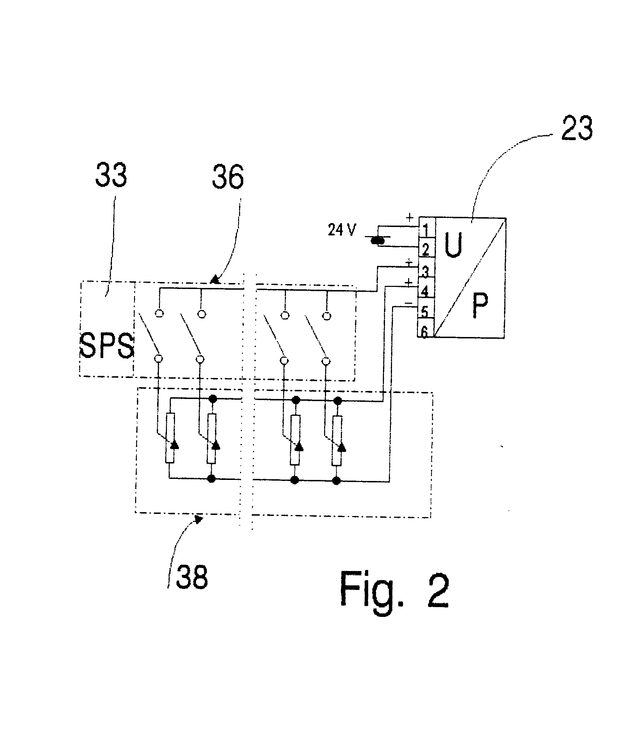

Die Sollwerte pₓ₁, pₓ₂, pₓ₃ der Druckregler 23-25 sind mittels der Programmsteuereinrichtung 33 über je eine in Fig. 2 schematisch dargestellte Potentiometer-Ansteuerung 38 gesteuert. Der Programmablauf wird durch einen Infrarot-Detektor 40 ausgelöst, der anspricht, wenn die (nächste) glühende Luppe die Position zum Entzundern erreicht hat. Das Weiterfördern der entzunderten Luppe wird durch einen an den Ausgang 36 der Steuereinrichtung 33 angeschlossenen Befehlgeber 41 ausgelöst.

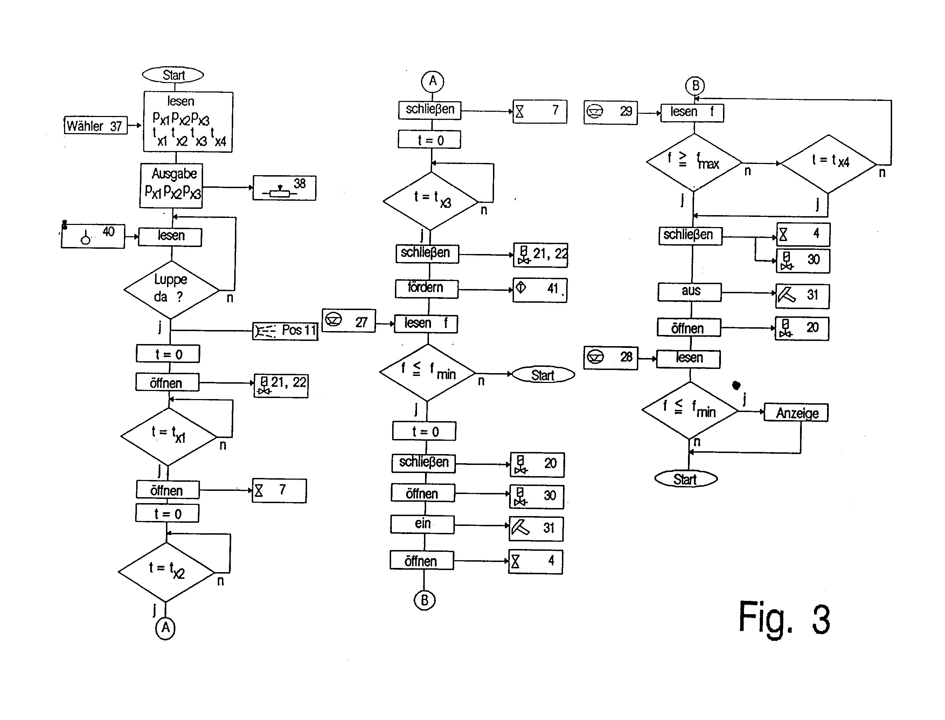

Der Programmablauf wird im folgenden am Beispiel des in Fig. 3 dargestellten Flussschemas erläutert. Im Programmspeicher 34 sind das im Flussschema dargestellte Programm und für jede Luppengrösse ein Datensatz mit vier Zeitwerten tₓ₁, tₓ₂, tₓ₃, tₓ₄ und drei Drucksollwerten pₓ₁, pₓ₂, pₓ₃ gespeichert, worin x die der Luppengrösse zugeordnete Wählnummer des Datensatzes ist.

Der Zeitwert tₓ₁ und der Drucksollwert pₓ₃ sind so gross gewählt, dass sich vor dem Beladen des Trägergasstroms mit dem Stoff, wie unten beschrieben, eine spiralförmige Bewegung des aus der Austrageinrichtung 11 strömenden Trägergases aufbauen kann. Der Zeitwert tₓ₁ kann auch länger bemessen werden, falls loser Zunder aus der Luppe ausgeblasen werden soll. Der Zeitwert tₓ₂ und die Drucksollwerte pₓ₁, pₓ₂ sind entsprechend der gewünschten Stoffmenge und -konzentration gewählt. Der Zeitwert tₓ₃ ist so gewählt, dass der nach dem Schliessen des Absperrorgans 7 in der Trägergasleitung 10 befindliche Stoff noch vollständig oder nahezu vollständig ausgeblasen wird. Der Zeitwert tₓ₄ begrenzt die Nachfüllzeit und ist entsprechend dem Fördertakt der Luppen so kurz bemessen, dass das Nachfüllen in der Zeit zwischen dem Wegführen der entzunderten Luppe und dem Zuführen der nächsten zu entzundernden Luppe erfolgt, ohne dass Wartezeiten auftreten.

In der folgenden Tabelle sind Beispiele dreier Datensätze für verschiedene Luppengrössen angegeben, denen ein Durchmesser der Trägergasleitung 10 von 25 mm und eine Länge des Abschnitts zwischen dem Stutzen 8 und der Austrageinrichtung 11 von 10 m zugrundeliegt.

| x = 1 | x = 2 | x = 3 |
|---|---|---|
| t₁₁ = 1,0 s | t₂₁ = 1,5 s | t₃₁ = 2,0 s |
| t₁₂ = 1,0 s | t₂₂ = 1,0 s | t₃₂ = 1,5 s |
| t₁₃ = 0,5 s | t₂₃ = 1,0 s | t₃₃ = 2,0 s |
| t₁₄ = 2.5 s | t₂₄ = 2.5 s | t₃₄ = 2.5 s |
| p₁₁ = 1,0 bar | p₂₁ = 1,3 bar | p₃₁ = 1,7 bar |
| p₁₂ = 4,0 bar | p₂₂ = 4,5 bar | p₃₂ = 5,0 bar |
| p₁₃ = 1,0 bar | p₂₃ = 2,0 bar | p₃₃ = 2,5 bar |

Die zugeordneten Luppengrössen und die Menge, des jeweils mit dem unten beschriebenen Programm ausgetragenen Stoffes sind

| für | x = 1 | x = 2 | x = 3 |
|---|---|---|---|
| Luppendurchmesser | 15,2 cm | 20,6 cm | 24,8 cm |
| Luppenlänge | 900 cm | 1000 cm | 1100 cm |
| Stoffmenge | 215 g | 315 g | 430 g |

Beim Programmstart wird der der Wählerstellung x zugeordnete Datensatz tₓ₁, tₓ₂, tₓ₃, tₓ₄, pₓ₁, Pₓ₂, Pₓ₃ gelesen. Die Drucksollwerte der drei Druckregler 23, 24, 25 werden über die Potentiometeransteuerungen 38 auf die Werte pₓ₁, pₓ₂, pₓ₃ eingestellt. Der IR-Detektor 40 wird abgefragt und sobald er die Anwesenheit einer glühende Luppe anzeigt, wird ein Befehl für die Positionierung der Austrageinrichtung 11 gegeben. Anschliessend wird die Uhrzeit auf 0 gestellt und gleichzeitig werden Oeffnungsbefehle an die Absperrorgane 21, 22 gegeben.

Das Trägergas strömt nun durch die Leitung 10 und die die Austrageinrichtung 11 und gleichzeitig strömt durch die Zweigleitung 12 Gas, wodurch sich eine spiralförmige Bewegung des aus der Austrageinrichtung 11 strömenden Trägergas aufbaut. Nach Ablauf der Zeit tₓ₁ wird ein Oeffnungsbefehl an das Absperrorgan 7 gegeben und die Uhrzeit auf 0 zurückgestellt. Durch das Druckgas aus der Leitung 1 wird der Stoff nun in die Trägergasleitung 10 getrieben und dadurch das Trägergas mit dem Stoff beladen. (Das Absperrorgan 20 ist offen). Nach Ablauf der Zeit tₓ₂ wird ein Schliessbefehl an das Absperrorgan 7 gegeben und die Zeit wieder auf 0 zurückgestellt. Der Stoffzufluss in die Trägergasleitung 10 ist damit unterbrochen, das Trägergas strömt aber weiter und treibt den noch in der Leitung 10 befindlichen Stoff aus. Sobald die Zeit tₓ₃ abgelaufen ist, werden Schliessbefehle an die Absperrorgane 21 und 22 gegeben, womit der Trägergasstrom unterbrochen wird. Gleichzeitig wird en Förderbefehl an den Befehlgeber 41 gegeben, der das Weiterfördern der entzunderten Luppe und die Zufuhr der nächsten zu entzundernden Luppe auslöst. Anschliessend wird der Niveaufühler 27 abgefragt. Ist der minimale Füllstand fₘᵢₙ im Behälter 2 nicht unterschritten, so geht das Programm zum Start.

Ist der minimale Füllstand fₘᵢₙ unterschritten, beginnt das im folgenden beschriebene Nachfüllunterprogramm. Die Zeit wird auf 0 zurückgestellt und es werden ein Schliessbefehl an das Absperrorgan 20, Oeffnungsbefehle an das Entlüftungsventil 30 und das Absperrorgan 4 sowie ein Einschaltbefehl an die Rütteleinrichtungen 31 gegeben. Der im Nachfülltrichter 5 befindliche Stoff rutscht nun in den Behälter 2 nach. Es wird dann jeweils der Niveaufühler 29 abgefragt und wenn dieser das Erreichen oder Ueberschreiten des maximalen Füllstands fₘₐₓ des Behälters 2 anzeigt oder wenn die Zeit tₓ₄ abgelaufen ist, werden Schliessbefehle an die Absperrorgane 4 und 30, ein Oeffnungsbefehl an das Absperrorgan 20 und ein Ausschaltbefehl an die Rütteleinrichtungen 31 gegeben. Damit ist der Nachfüllvorgang abgeschlossen und der nun wieder druckdicht geschlossene Behälter 2 wird durch das offene Absperrorgan 20 unter den Druck pₓ₁ gesetzt. Der Niveaufühler 28 wird abgefragt und falls der Füllstand den minimalen Füllstand fₘᵢₙ des Nachfülltrichters 5 unterschreitet, wird eine Anzeige eingeschaltet, welche das erforderliche Nachfüllen des Trichters 5 anzeigt oder automatisch auslöst, worauf das Programm zum Start geht.

Hat die nächste Luppe andere Abmessungen, ist noch im Verlauf des laufenden Programms die Wählerstellung x des Wählers 37 von einer Bedienperson entsprechend geändert worden, so dass beim Programmstart der der neuen Wählerstellung x zugeordnete Datensatz tₓ₁, tₓ₂, tₓ₃, tₓ₄, pₓ₁, pₓ₂, pₓ₃ für die anderen Luppenabmessungen eingelesen und das Programm dementsprechend modifiziert abläuft. Anstelle oder zusätzliche zum manuell einstellbaren Wähler 37 für die Wahl des Programms kann ein automatischer Wähler vorgesehen sein, der mittels entsprechender Messorgane die Abmessungen (Durchmesser und Länge) der nächsten jeweils zu entzundernden Luppe bestimmt und das diesen Abmessungen zugeordnete Programm wählt.

Das Oeffnen und Schliessen des Absperrorgans 22 erfolgt im Beispiel gleichzeitig mit demjenigen des Absperrorgans 21, so dass das Gas dem Drallgeber und dem Durchlassorgan der Austrageinrichtung 11 gleichzeitig zugeführt wird. Das Program kann aber auch so ausgestaltet sein, dass eine mittels des Wählers wählbare Zeitdifferenz zwischen dem Oeffnen bzw. Schliessen der Absperrorgane 21 und 22 auftritt.

Zweckmässig sind (nicht dargestellte) akustische und optische Störmelder vorgesehen, die von der Steuereinrichtung 33 ausgelöst werden, wenn ein (nicht dargestellter) Drucksensor im Behälterinneren einen Ueberdruck oder der Niveaufühler 27 nach dem Nachfüllen ein Unterschreiten des minimalen Füllstands im Behälter 2 anzeigt.

## Patentansprüche

1. Vorrichtung zum Beladen eines Trägergasstroms mit einem fliessfähigen Stoff, umfassend
a) einen an eine Druckgasleitung (1) angeschlossenen Vorratsbehälter (2) für den Stoff, wobei der Vorratsbehälter (2) einen druckdicht verschliessbaren Stoffeinlass (3) und einen in eine Trägergasleitung (10) mündende, durch ein Absperrorgan (7) absperrbaren Stoffauslass (6) aufweist,
b) einen ersten Druckregler (23) in der Druckgasleitung (1) sowie
c) einen zweiten Druckregler (24) in der Trägergasleitung (10) und
d) eine Programmsteuereinrichtung (33) mit einem Programmspeicher (34), in dem mehrere Programme für das Beladen des Trägergasstroms mit unterschiedlichen Stoffmengen und/oder Stoffkonzentrationen gespeichert sind und
e) einen Wähler (37) für die Programmwahl,
dadurch gekennzeichnet, dass
f) im Programmspeicher für jedes Programm Zeitwerte (tₓ₁, tₓ₂) für zeitgesteuerte Schaltbefehle 3 nm Oeffnen und Schliessen des Absperrorgans (7) und je zwei unterschiedliche Sollwerte (pₓ₁,pₓ₂) für den ersten und zweiten Druckregler (23, 24) abgespeichert sind, welche Zeit- und Sollwerte (tₓ₁, tₓ₂ resp. pₓ₁, pₓ₂) genau so gewählt sind, dass zumindest die Stoffmenge unmittelbar durch die Differenz der Sollwerte (pₓ₁, pₓ₂) und durch die aufgrund der zeitgesteuerten Schaltbefehle bestimmte Oeffnungszeit (tₓ₂) des Absperrorgans (7) eindeutig bestimmt ist.

2. Vorrichtung nach Anspruch 1, dadurch gekennzeichnet, dass ein zweites, in Strömungsrichtung vor der Mündungsstelle des Stoffauslasses (6) in der Trägergasleitung (10) angeordnetes Absperrorgan (21) durch die Programmsteuereinrichtung (33) gesteuert ist, und jedes Programm Zeitwerte (tₓ₃) für zeitgesteuerte Schaltbefehle 3 nm Oeffnen und Schliessen des zweiten Absperrorgans 21) aufweist.

3. Vorrichtung nach Anspruch 1 oder 2, gekennzeichnet durch einen über ein drittes von der Steuereinrichtung (33) gesteuertes Absperrorgan (4) mit dem Stoffeinlass (3) in Verbindung stehenden Nachfülltrichter (5), ein viertes, durch die Steuereinrichtung (33) gesteuertes Absperrorgan (20) in der Druckgasleitung (1), ein durch die Steuereinrichtung (33) gesteuertes Entlüftungsorgan (30) für die Entlüftung des Behälters (2), und einen im unteren Teil des Behälters (2) angeordneten, mit der Steuereinrichtung (33) verbundenen Niveaufühler (27), welcher das Erreichen oder Unterschreiten eines minimalen Füllstands (fₘᵢₙ) meldet, wobei im Programmspeicher (34) ein Nachfüllprogramm gespeichert ist, mittels dem die Steuereinrichtung (33) bei ein Erreichen oder Unterschreiten des minimalen Füllstands (fₘᵢₙ) meldendem Niveaufühler (27) jeweils nach dem Schliessbefehl für das erste Absperrorgan (7) einen Schliessbefehl an das vierte Absperrorgan (20) und Oeffnungsbefehle an das Entlüftungsorgan (30) sowie das dritte Absperrorgan (4) und nach einer vorgewählten Zeitdauer (tₓ₄) Schliessbefehle an das dritte Absperrorgan (4) und das Entlüftungsorgan (30) sowie einen Oeffnungsbefehl an das vierte Absperrorgan (20) gibt.

4. Vorrichtung nach Anspruch 3, gekennzeichnet durch einen im oberen Teil des Behälters (2) angeordneten, mit der Steuereinrichtung (33) verbundenen zweiten Niveaufühler (29), welcher das Erreichen oder Ueberschreiten eines maximalen Füllstands (fₘₐₓ) meldet, wobei die Steuereinrichtung (33) beim Ausführen des Nachfüllprogramms einen Schliessbefehl an das dritte Absperrorgan (4) gibt, sobald der zweite Niveaufühler (29) das Erreichen oder Ueberschreiten des maximalen Füllstands (fₘₐₓ) meldet.

5. Vorrichtung nach einem der Ansprüche 1 bis 4, dadurch gekennzeichnet, dass am unteren Teil des Behälters (2) und/oder des Nachfülltrichters (5) eine bzw. je eine Rütteleinrichtung (31) angeordnet ist bzw. sind.

6. Vorrichtung nach einem der Ansprüche 1 bis 5 zum Beladen eines Trägergassstroms mit einem pulverförmigen Entzunderungsmittel und zum Aufbringen des Entzunderungsmittels auf die Innenfläche eines Rohrs oder einer Luppe, gekennzeichnet durch eine Austrageinrichtung (11) mit einem an den Ausgang der Trägergasleitung (10) angeschlossenen Durchlassorgan und einem an eine in Strömungsrichtung vor der Mündungsstelle des Stoffauslasses (6) von der Trägergasleitung (10) abgezweigte Zweigleitung (12) angeschlossenen Drallgeber.

7. Vorrichtung nach Anspruch 6, gekennzeichnet durch ein von der Steuereinrichtung (33) gesteuertes Absperrorgan (22) in der Zweigleitung (12).

8. Vorrichtung nach Anspruch 2, dadurch gekennzeichnet, dass die zeitgesteuerten (tₓ₁, tₓ₂, tₓ₃) Schaltbefehle so gewählt sind, dass das zweite Absperrorgan (21) eine erste vorbestimmte Zeitdauer (tₓ₁) vor dem ersten Absperrorgan (7) geöffnet und eine zweite vorbestimmte Zeitdauer (tₓ₃) nach dem ersten Absperrorgan (7) geschlossen wird.

9. Vorrichtung nach Anspruch 6 oder 7, dadurch gekennzeichnet, dass bei einem Durchmesser der Trägergasleitung (10) von 25 mm und einer Länge des Abschnitts zwischen einem, den Stoffauslaß mit der Trägergasleitung verbinden den, Stutzen (8) und der Austrageinrichtung (11) von 10 m für die nachfolgend angegebenen Luppengrössen und Stoffaustragsmengen
| für | x = 1 | x = 2 | x = 3 |
|---|---|---|---|
| Luppendurchmesser | 15,2 cm | 20,6 cm | 24,8 cm |
| Luppenlänge | 900 cm | 1000 cm | 1100 cm |
| Stoffmenge | 215 g | 315 g | 430 g |
folgende Zeit- und Sollwerte (tₓ₁, tₓ₂, tₓ₃, tₓ₄ resp, pₓ₁, pₓ₂, pₓ₃) abgespeichert sind:
| x = 1 | x = 2 | x = 3 |
|---|---|---|
| t₁₁ = 1,0 s | t₂₁ = 1,5 s | t₃₁ = 2,0 s |
| t₁₂ = 1,0 s | t₂₂ = 1,0 s | t₃₂ = 1,5 s |
| t₁₃ = 0,5 s | t₂₃ = 1,0 s | t₃₃ = 2,0 s |
| t₁₄ = 2,5 s | t₂₄ = 2,5 s | t₃₄ = 2,5 s |
| p₁₁ = 1,0 bar | p₂₁ = 1,3 bar | p₃₁ = 1,7 bar |
| p₁₂ = 4,0 bar | p₂₂ = 4,5 bar | p₃₂ = 5,0 bar |
| p₁₃ = 1,0 bar | p₂₃ = 2,0 bar | p₃₃ = 2,5 bar . |

## Claims

1. Apparatus for the charging of a carrier gas flow with a flowable substance, comprising
a) a supply container (2) for the substance which is connected to a pressurised-gas conduit (1), the supply container (2) having a substance inlet (3) closable in pressure-tight manner and also a substance outlet (6) which opens into a carrier gas conduit (10) and is closable by means of a shutoff device (7),
b) a first pressure controller (23) in the pressurised-gas conduit (1) and
c) a second pressure controller (24) in the carrier gas conduit (10), and
d) a programme control device (33) with a programme memory (34) in which a plurality of programmes for the charging of the carrier gas flow with differing quantities of substance and/or substance concentrations are stored, and
e) a selector (37) for programme choice,
characterised in that
f) there are stored in the programme memory, for each programme, time values (tₓ₁, tₓ₂) for time-controlled operating commands for the opening and closing of the shutoff device (7) and respectively two differing desired values (pₓ₁, pₓ₂) for the first and second pressure controllers (23, 24), which time and desired values (tₓ₁, tₓ₂ and pₓ₁, pₓ₂ respectively) are precisely selected in such a manner that at least the substance quantity is unequivocally determined by the difference in the desired values (pₓ₁, pₓ₂) and by the opening time (tₓ₂), determined on the basis of the time-controlled operating commands, of the shutoff device (7).

2. Apparatus according to claim 1, characterised in that a second shutoff device (21), situated upstream, as considered in the direction of flow, of the point of entry of the substance outlet (6) into the carrier gas conduit (10), is controlled by the programme control device (33), and each programme has time values (Tₓ₃) for time-controlled operating commands for the opening and closing of the second shutoff device (21).

3. Apparatus according to claim 1 or 2, characterised by a replenishment hopper (5) communicating with the substance inlet (3) via a third shutoff device (4) controlled by the control device (33), a fourth shutoff device (20) situated in the pressurised-gas conduit (1) and controlled by the control device (33), a venting device (30) provided for the venting of the container (2) and controlled by the control device (33), and a level sensor (27) arranged in the lower portion of the container (2) and connected to the control device (33), this sensor signalling when a minimum contents level (fₘᵢₙ) is reached or gone below, and in the programme memory (34) a replenishment programme is stored by means of which the control device (33), on the level sensor (27) signalling that the minimum contents level (fₘᵢₙ) is reached or gone below, sends in each case after the closing command for the first shutoff device (7) a closing command to the fourth shutoff device (20) and opening commands to the venting device (30) and also the third shutoff device (4) and, after a preselected time period (Tₓ₄), closing commands to the third shutoff device (4) and the venting device (30) and also an opening command to the fourth shutoff device (20).

4. Apparatus according to claim 3, characterised by a second level sensor (29) which is situated in the upper portion of the container (2) and is connected to the control device (33), and which signals the attainment or exceeding of a maximum contents level (fₘₐₓ), and when carrying out the replenishment programme the control device (33) sends a closing command to the third shutoff device (4) as soon as the second level sensor (29) signals the attainment or exceeding of the maximum contents level (fₘₐₓ).

5. Apparatus according to one of claims 1 to 4, characterised in that a shaking device (31) is arranged on the lower portion of the container (2) or of the replenishment hopper (5), or shaking devices are arranged one on each of the said lower portions.

6. Apparatus according to one of claims 1 to 5 for the charging of a carrier gas flow with a pulverulent descaling medium and for applying the descaling medium to the inner surface of a tube or of a bloom, characterised by a discharge device (11) with a passage-allowing element connected to the outlet of the carrier gas conduit (10), and with a spin-imparting element connected to a branch conduit (12) branched off from the carrier gas conduit (10) upstream of the point of entry of the substance outlet (6) into the carrier gas conduit as considered in the direction of flow.

7. Apparatus according to claim 6, characterised by a shutoff device (22) arranged in the branch conduit (12) and controlled by the control device (33).

8. Apparatus according to claim 2, characterised in that the time-controlled (tₓ₁, tₓ₂, tₓ₃) operating commands are so selected that the second shutoff device (21) is opened for a first predetermined period of time (tₓ₁) before the first shutoff device (7), and is closed for a second predetermined period of time (tₓ₃) after the first shutoff device (7).

9. Apparatus according to claim 6 or 7, characterised in that if the diameter of the carrier gas conduit (10) is 25 mm and the length of the portion between on the one hand a union (8) connecting the substance outlet to the carrier gas conduit and on the other hand the discharge device (11) is 10 m, for the bloom sizes and substance discharge quantities given hereinafter
| for | x = 1 | x = 2 | x = 3 |
|---|---|---|---|
| bloom diameter | 15.2 cm | 20.6 cm | 24.8 cm |
| bloom length | 900 cm | 1000 cm | 1100 cm |
| substance quantity | 215 g | 315 g | 430 g |
the following time and desired values (tₓ₁, tₓ₂, tₓ₃, tₓ₄ and pₓ₁, pₓ₂, pₓ₃ respectively) are stored :
| x = 1 | x = 2 | x = 3 |
|---|---|---|
| t₁₁ = 1.0 s | t₂₁ = 1.5 s | t₃₁ = 2.0 s |
| t₁₂ = 1.0 s | t₂₂ = 1.0 s | t₃₂ = 1.5 s |
| t₁₃ = 0.5 s | t₂₃ = 1.0 s | t₃₃ = 2.0 s |
| t₁₄ = 2.5 s | t₂₄ = 2.5 s | t₃₄ = 2.5 s |
| p₁₁ = 1.0 bar | p₂₁ = 1.3 bars | p₃₁ = 1.7 bars |
| p₁₂ = 4.0 bars | p₂₂ = 4.5 bars | p₃₂ = 5.0 bars |
| p₁₃ = 1.0 bar | p₂₃ = 2.0 bars | p₃₃ = 2.5 bars. |

## Revendications

1. Dispositif pour le chargement d'un courant de gaz porteur avec une substance fluide comprenant
a) un réservoir de stockage (2) raccordé à une conduite de gaz sous pression (1) pour la substance, le réservoir de stockage (2) comportant une entrée de substance (3) verrouillable étanche à la pression et une sortie de substance obturable par un organe d'arrêt (7), aboutissant dans une conduite de gaz porteur (10)
b) un premier régulateur de pression (23) dans la conduite de gaz sous pression (1) ainsi que
c) un deuxième régulateur de pression (24) dans la conduite de gaz porteur (10) et
d) un système de commande de programme (33) avec une mémoire programmable (34) dans laquelle sont stockés plusieurs programmes pour le chargement du courant de gaz porteur avec différentes quantités et/ou concentrations de substance, et
e) un sélecteur (37) pour la sélection du programme,
caractérisé en ce que
f) dans la mémoire programmable sont stockées pour chaque programme les valeurs de temps (tₓ₁, tₓ₂) pour des instructions ou ordres de commutation synchronisés (3) pour l'ouverture et la fermeture de l'organe d'arrêt (7) et respectivement deux valeurs nominales différentes (Pₓ₁, Pₓ₂) pour le premier et le deuxième régulateurs de pression (23, 24), lesquelles valeurs de temps et valeurs nominales (tₓ₁, tₓ₂ respectivement Pₓ₁, Pₓ₂) sont sélectionnées avec précision pour qu'au moins la quantité de substance soit déterminée de façon univoque directement par la différence des valeurs nominales (Pₓ₁, Pₓ₂) et par le temps d'ouverture (tₓ₂) de l'organe d'arrêt (7) sur la base des instructions ou ordres de commutation synchronisés.

2. Dispositif selon la revendication 1, caractérisé en ce qu'un deuxième organe d'arrêt (21) agencé dans le sens d'écoulement en amont du point d'aboutissement de la sortie de substance (6) dans la conduite de gaz porteur (10) est commandé par le système de commande programmable (33) et chaque programme comporte des valeurs de temps (tₓ₃) pour les ordres de commutation synchronisés pour l'ouverture et la fermeture de l'organe de commande (21).

3. Dispositif selon la revendication 1 ou 2, caractérisé par un entonnoir de rechargement (5) en communication avec l'entrée de substance (3) par l'intermédiaire d'un troisième organe d'arrêt (4) commandé par le système de commande (33), un quatrième organe d'arrêt (20) commandé par le système de commande (33) dans la conduite de gaz sous pression, un organe d'aération commandé par le système de commande (33) pour la purge du récipient (2), et un capteur de niveau (27) raccordé au système de commande (33) annonçant le moment où le niveau de remplissage minimum (fₘᵢₙ) est atteint ou franchi respectivement après l'ordre de fermeture pour le premier organe d'arrêt (7) émet un ordre de fermeture au quatrième organe d'arrêt (20) et des ordres d'ouverture à l'organe de purge d'air (30) ainsi qu'au troisième organe d'arrêt (4) et après un laps de temps présélectionné (tₓ₄) des ordres de fermeture au troisième organe d'arrêt (4) et à l'organe de purge d'air (30) ainsi qu'un ordre d'ouverture au quatrième organe d'arrêt (20).

4. Dispositif selon la revendication 3, caractérisé par un deuxième capteur de niveau (29) raccordé au système de commande (33) agencé dans la partie supérieure du récipient (2) qui signale le moment où le niveau de remplissage maximum (fₘₐₓ) est atteint ou dépassé, le système de commande (33) lors de l'exécution du programme de rechargement émet un ordre de fermeture au troisième organe d'arrêt (4) dès que le deuxième capteur de niveau (29) annonce le franchissement ou le dépassement du niveau de remplissage maximum (fₘₐₓ).

5. Dispositif selon l'une des revendications 1 à 4, caractérisé en ce que dans la partie inférieure du récipient (2) et/ou de l'entonnoir de remplissage (5) est ou sont agencé(s) un ou plusieurs systèmes à secousses (31).

6. Dispositif selon l'une des revendications 1 à 5 pour le chargement d'un courant de gaz porteur avec un produit de décalaminage pulvérulent et pour l'application du produit de décalaminage sur la surface interne d'un tube ou d'une loupe, caractérisé par un système d'évacuation (11) avec un organe de passage raccordé à la sortie de la conduite de gaz porteur (10) et un émetteur d'impulsions raccordé à une dérivation (12) dans le sens d'écoulement en amont du point d'embouchure de la sortie des substance (6) de la conduite des gaz porteurs (10).

7. Dispositif selon la revendication 6, caractérisé par un organe d'arrêt (22) dans la dérivation (12), organe d'arrêt commandé par le système de commande (33).

8. Dispositif selon la revendication 2, caractérisé en ce que les ordres de commande synchronisés (tₓ₁, tₓ₂, tₓ₃) sont sélectionnés de telle manière que le deuxième organe d'arrêt (21) s'ouvre pendant une première durée prédéterminée (tₓ₁) avant le premier organe d'arrêt (7) et se ferme pendant une deuxième durée prédéterminée (tₓ₃) après le premier organe d'arrêt (7).

9. Dispositif selon la revendication 6 ou 7, caractérisé en ce pour un diamètre de la conduite de gaz porteur (10) de 25 mm et une longueur de la section entre une tubulure (8) raccordant la sortie de substance avec la conduite de gaz porteur et le système d'évacuation (11) de 10 mm pour les dimensions de loupes indiquées ci-après et les quantités d'évacuation de substance
| pour | x = 1 | x = 2 | x = 3 |
|---|---|---|---|
| Diamètre de loupe | 15,2 cm | 20,6 cm | 24,8 cm |
| Longueur de loupe | 900 cm | 1000 cm | 1100 cm |
| Quantité de substance | 215 g | 315 g | 430 g |
les valeurs de temps et les valeurs nominales suivantes (tₓ₁, tₓ₂, tₓ₃, tₓ₄ respectivement Pₓ₁, Pₓ₂, Pₓ₃) sont stockées :
| x = 1 | x = 2 | x = 3 |
|---|---|---|
| t₁₁ = 1,0 s | t₂₁ = 1,5 s | t₃₁ = 2,0 s |
| t₁₂ = 1,0 s | t₂₂ = 1,0 s | t₃₂ = 1,5 s |
| t₁₃ = 0,5 s | t₂₃ = 1,0 s | t₃₃ = 2,0 s |
| t₁₄ = 2,5 s | t₂₄ = 2,5 s | t₃₄ = 2,5 s |
| P₁₁ = 1,0 bar | P₂₁ = 1,3 bar | P₃₁ = 1,7 bar |
| P₁₂ = 4,0 bars | P₂₂ = 4,5 bars | P₃₂ = 5,0 bars |
| P₁₃ = 1,0 bar | P₂₃ = 2,0 bars | P₃₃ = 2,5 bars |
